# FASCICULE DE BREVET EUROPEEN

(11) **EP 4 086 386 B1**
(45) Date de publication et mention de la délivrance du brevet: **01.10.2025**
(21) Numéro de dépôt: 22167820.4
(22) Date de dépôt: 12.04.2022
(51) Int. Cl.: D06M 13/192, D06M 13/507, D06M 13/513, D06M 15/643, C08G 77/14, C08G 77/16, C08L 83/04, D06M 13/207

(54) **COMPOSITION D'APPRÊT POUR TEXTILE, PROCÉDÉ DE REVÊTEMENT D'UN TEXTILE ET TEXTILE REVÊTU OBTENU PAR CE PROCÉDÉ**
ZUSAMMENSETZUNG ZUR VEREDLUNG VON TEXTILIEN, VERFAHREN ZUR BESCHICHTUNG VON TEXTILIEN UND DURCH DIESES VERFAHREN ERHALTENE BESCHICHTETE TEXTILIEN
FINISHING COMPOSITION FOR TEXTILE, METHOD FOR COATING A TEXTILE AND COATED TEXTILE OBTAINED BY SAID METHOD

(30) Priorité: 23.04.2021 FR 2104256
(43) Date de publication de la demande: 09.11.2022
(73) Titulaire: Institut Français Textile & Habillement (IFTH), 75013 Paris (FR); Rescoll, 33600 Pessac (FR)
(72) Inventeur: FERREIRA, Isabelle, 69210 L'ARBRESLE (FR); RONJAT, Pauline, 69600 OULLINS (FR); DUEE, Natacha, 33400 TALENCE (FR); DELIANE, Florent, 33800 BORDEAUX (FR)
(74) Mandataire: Ipsilon

(56) Documents cités:
- FR-A1- 2 984 343
- US-A1- 2011 230 633

## Description

### DOMAINE DE L'INVENTION

L'invention concerne le domaine du revêtement des textiles, tout particulièrement des textiles à fibres cellulosiques. Plus spécifiquement, l'invention vise un apprêt et un procédé pour la préparation de textiles présentant certaines propriétés souhaitées, en particulier de défroissabilité, d'infroissabilité, de repassage facilité, de tenue au lavage et de facilité d'entretien, d'« easy-care » au sens large, selon l'expression anglo-saxonne communément utilisée dans le domaine. Plus précisément, l'invention vise une composition d'apprêt pour textile, un procédé de revêtement d'un textile utilisant ladite composition et le textile revêtu obtenu par ledit procédé.

### ETAT ANTERIEUR DE LA TECHNIQUE

L'industrie textile utilise de nos jours de nombreux traitements industriels de finition. Ainsi, les textiles sont fréquemment traités en fin de fabrication industrielle par un procédé d'ennoblissement, qui permet de conférer certaines caractéristiques au textile ainsi ennobli. Cette opération d'ennoblissement peut être réalisée par des opérations mécaniques ou chimiques, que l'on qualifie d'apprêts, permettant de réaliser un traitement de finition qui va donner au produit son aspect final. L'apprêt chimique consiste en la modification des fibres textiles par le biais d'une action chimique, typiquement effectuée par foulardage. Ce traitement peut conférer au textile des propriétés très diverses.

Le développement durable faisant partie des préoccupations de plus en plus prégnantes de la société, l'industrie du textile accorde une place croissante à la prise en compte du cycle de vie des matériaux obtenus et à la valorisation de ressources naturelles renouvelables, dans le respect des personnes et de l'environnement. En effet, tout traitement développé doit être non toxique et respecter des réglementations et des labels tel que le label Oekotex Standard 100.

Le secteur industriel textile utilise couramment des traitements par apprêt à base de résines urée-formol, du fait de leur faible coût et de leur réactivité vis-à-vis des fibres cellulosiques (coton, viscose...). Or ces résines sont classées Cancérogène Mutagène Reprotoxique (CMR) car elles peuvent libérer des traces de formaldéhyde (ou formol) lors de l'application dans les usines de productions ou lors de l'usage des produits textiles traités. L'industrie textile cherche donc à remplacer cette chimie par un traitement plus respectueux de l'environnement et des personnes.

Par ailleurs, les apprêts chimiques doivent répondre à des préoccupations développées sous le terme « easy-care », qualificatif du textile ennobli qui renferme plusieurs notions autour de la facilité d'entretien du textile (comme la tenue, la défroissabilité, l'infroissabilité et le repassage facilité), et qui a été développé pour répondre notamment à la demande des consommateurs pour l'habillement ou les vêtements de travail. Les traitements d'apprêts chimiques actuels « easy-care » sont le plus souvent appliqués par foulardage lors de l'étape d'ennoblissement.

D'autre part, il a été développé d'autres procédés d'obtention par voie sol-gel de revêtement sur textile. Ainsi le document FR 2 984 343 décrit une première voie qui consiste en l'utilisation d'une composition pour le revêtement d'un support notamment textile, ladite composition comprenant un solvant aqueux ; un acide polycarboxylique ; un catalyseur de la formation d'un intermédiaire anhydre d'acide à partir de l'acide polycarboxylique ; ainsi qu'un précurseur sol-gel dont tous les groupements sont hydrolysables (tel que le tétraéthoxysilane ou TEOS), ledit précurseur sol-gel étant combiné soit avec des particules fonctionnelles soit avec un précurseur sol-gel comprenant au moins un groupement fonctionnel non hydrolysable (tel l'hexadécyltriméthoxysilane ou HDTMS), soit avec les deux ; ou bien qu'un précurseur sol-gel comprenant au moins un groupement fonctionnel non hydrolysable et éventuellement des particules fonctionnelles. Des propriétés particulières sont recherchées telles que la facilité d'entretien, la résistance à l'abrasion ou d'autres propriétés liantes et/ou de renfort.

Les précurseurs sol-gel décrits dans ce document peuvent comprendre des particules fonctionnalisées à l'aide d'un groupement fonctionnalisant destiné à assurer la liaison de ces particules au support textile et/ou au revêtement. Le groupement fonctionnalisant correspondant est avantageusement une fonction époxyde ou une fonction amine. À titre d'exemple il est cité le groupement glycidyloxypropyltriméthoxysilane (GTMOS).

Dans les exemples du document FR 2 984 343, sont utilisés l'acide succinique (ou bien l'acide maléique ou bien l'acide 1,2,3,4-butanetétracarboxylique), le TEOS, l'hypophosphite de sodium et le HDTMS, et éventuellement des particules fonctionnalisées avec une fonction compatible, comme par exemple, une fonction amine obtenue par greffage d'aminopropyltriéthoxysilane. Dans ce cas de figure, il y a une accroche des particules et non une simple intégration au revêtement.

Une seconde voie consiste à se passer de l'utilisation d'acide polycarboxylique. Par exemple, la demande de brevet FR 3 057 581 décrit un procédé de revêtement de matériau textile mettant en œuvre la fourniture d'une composition de revêtement comprenant un solvant aqueux et un précurseur organosilicé, l'imprégnation du matériau textile par foulardage, puis le séchage. La composition de revêtement est exempte d'acide polycarboxylique et de préférence également exempte de catalyseur. Parmi les précurseurs organosilicés, sont cités notamment le tétraéthoxysilane (TEOS) et le (3-glycidyloxypropyl)triéthoxysilane (GPTEOS). Le textile obtenu trouve une application particulière pour la filtration de gaz, notamment toxiques polaires et apolaires, et peut être utilisé pour réaliser un équipement adapté aux risques NBC (Nucléaires, Bactériologiques, Chimiques).

L'invention vise à proposer une solution alternative de composition d'apprêt pour textile, en vue d'obtenir les propriétés recherchées, en particulier de défroissabilité, d'infroissabilité, de repassage facilité, de tenue au lavage et de facilité d'entretien.

La préparation de silicones à fonctions amine-amides sont décrites dans US-A-2011/0230633. Il est mentionné que ce type de silicones peut-être utilisé entre autre dans l'industrie textile, notamment pour conférer des propriétés d'infroissabilité.

### EXPOSE DE L'INVENTION

Selon un premier aspect, l'invention concerne une composition d'apprêt pour textile comprenant :
- au moins un solvant aqueux ;
- au moins un acide polycarboxylique ;
- au moins un catalyseur de la formation d'un anhydre d'acide à partir de l'acide polycarboxylique ;
- au moins un composé silane comprenant au moins un, de préférence trois ou quatre, de façon encore plus préférée quatre, groupement(s) hydrolysable(s) ;
- au moins un composé silane comportant au moins un groupement fonctionnel choisi dans le groupe formé par les époxys, les isocyanates et les mercaptos ; et
- au moins un silicone présentant une terminaison silanol.

Une terminaison est un groupement fonctionnel terminal.

De préférence, la composition est constituée essentiellement, de préférence est constituée, d'un solvant aqueux ; d'un acide polycarboxylique ; d'un catalyseur de la formation d'un anhydride d'acide à partir de l'acide polycarboxylique ; d'un composé silane comprenant au moins un groupement hydrolysable ; d'un composé silane comportant au moins un groupement fonctionnel choisi dans le groupe formé par les époxys, les isocyanates et les mercaptos ; et d'un silicone présentant une terminaison silanol.

Il est particulièrement préféré selon l'invention que le composé silane comprenant au moins un groupement fonctionnel ne soit pas sous forme de particules, contrairement à l'enseignement du document FR 2 984 343.

La composition selon l'invention permet de disposer d'un apprêt de finition qui va permettre de revêtir un textile et d'obtenir un textile revêtu facile d'entretien, et présentant des propriétés recherchées telles que la tenue, la défroissabilité, l'infroissabilité et/ou le repassage facilité.

Cette composition se distingue du document FR 2 984 343 notamment par la présence d'un composant organosilicé : le silicone présentant une terminaison silanol, mais également la présence d'un composant organosilicé comportant au moins un groupement fonctionnel choisi dans le groupe formé par les époxys, les isocyanates et les mercaptos.

La composition selon l'invention a pour effet surprenant d'améliorer la défroissabilité, la souplesse et la tenue du textile une fois déposée en revêtement sur un textile support. Par « A et/ou B », on entend selon l'invention soit A, soit B, soit A et B.

Avantageusement, cette composition ne libère pas de formaldéhyde lors du revêtement d'un textile, contrairement aux compositions commerciales courantes à base d'urée-formol.

La composition est généralement sous forme d'une solution base aqueuse qui permet d'imprégner un textile de façon uniforme.

Selon l'invention, la composition comprend de préférence de 45 à 97% en poids de solvant. Le solvant comprend généralement, selon l'invention, au moins 90% et moins de 100% en poids d'eau.

L'acide polycarboxylique est de préférence choisi dans le groupe formé par l'acide maléique, l'acide succinique, l'acide tartrique, l'acide citrique et l'acide 1,2,3,4-butanetétracarboxylique (ou BTCA) et leurs mélanges. Il peut être solide, par exemple sous forme de poudre. De façon encore plus préférée, l'acide polycarboxylique est le 1,2,3,4-butanetétracarboxylique, de numéro CAS 1703-58-8.

La teneur en acide polycarboxylique doit être au minimum de 0,1%, et de préférence comprise dans l'intervalle de 0,1 à 20%, en poids par rapport au poids total de la composition.

Le catalyseur de la formation d'un anhydre d'acide à partir de l'acide polycarboxylique est de préférence choisi parmi les composés phosphorés, tels que l'hypophosphite de sodium et l'hydrogénophosphate de potassium. Il peut être solide, par exemple sous forme de poudre. De façon encore plus préférée, ledit catalyseur est l'hypophosphite de sodium (ou thiosulfate de sodium, numéro CAS 123333-67-5).

La teneur en catalyseur doit être au minimum de 0,01 %, et de préférence comprise dans l'intervalle de 0,1 à 20%, en poids par rapport au poids total de la composition.

Le composé silane comprenant au moins un groupement hydrolysable est de préférence choisi dans le groupe formé par le tétraméthoxysilane (TMOS), le tétraéthoxysilane (TEOS), le tétrabutoxysilane, le tétrapropoxysilane, l'éthyltriéthoxysilane, l'éthyltriméthoxysilane, le méthyltriéthoxysilane, le méthyltriméthoxysilane et leurs mélanges, le composé silane comprenant au moins un groupement hydrolysable étant de façon encore plus préférée le TEOS (de numéro CAS 78-10-4).

La teneur en composé silane comprenant au moins un groupement hydrolysable doit être comprise dans l'intervalle de 0,1 % à 8 %, en poids par rapport au poids total de la composition. Il peut se présenter sous forme liquide.

Le composé silane comportant au moins un groupement fonctionnel choisi dans le groupe formé par les époxys, les isocyanates et les mercaptos est de préférence un composé silane comportant au moins un groupement fonctionnel choisi dans le groupe formé par les époxys.

Selon l'invention, le composé silane comportant au moins un groupement fonctionnel choisi dans le groupe formé par les époxys, les isocyanates et les mercaptos, est de préférence choisi dans le groupe formé par le 3-glycidyloxypropyltriméthoxysilane (GPTMOS), le 3-glycidyloxypropyltriéthoxysilane ((GPTEOS), le (3-Aminopropyl)triéthoxysilane, le (3-Aminopropyl)triméthoxysilane, le (3-Mercaptopropyl)triméthoxysilane, le 3-(Triméthoxysilyl)-1-propanethiol, le 3-isocyanatopropyltriéthoxysilane, le 3-isocyanatopropylméthyldiéthoxysilane, le 3-isocyanatopropyltriméthoxysilane, le 3-isocyanatopropylméthyldiméthoxysilane, le 2-(3,4-époxycyclohexyl)éthyltriméthoxysilane, le 2-(3,4-époxycyclohexyl) éthyltriéthoxysilane, le 5,6-époxyhexyltriéthoxysilane, le (3-glycidoxypropyl) méthyldiéthoxysilane, le (3- glycidoxypropyl)méthyldiméthoxysilane, le 8-glycidyloxyoctyltriméthoxysilane, le 1-(3-glycidoxypropyl)-1,1,3,3,3-pentaethoxy-1,3-sisilapropanone), et leurs mélanges. De façon encore plus préférée, le composé silane comportant au moins un groupement fonctionnel choisi dans le groupe formé par les époxys, les isocyanates et les mercaptos, est le GPTEOS (numéro CAS 2530-83-8).

La teneur en composé silane comportant au moins un groupement fonctionnel choisi dans le groupe formé par les époxys, les isocyanates et les mercaptos, est le plus souvent comprise dans l'intervalle de 3 à 25% en poids, par rapport au poids total de la composition. Selon l'invention, le silicone présentant une terminaison silanol peut être tout silicone connu de l'homme du métier, sur lequel un groupement terminal silanol a été greffé. Il peut être par exemple un copolymère tel que le copolymère de diphénylsiloxane-diméthylsiloxane, sur lequel un groupement terminal silanol a été greffé. Il est de préférence choisi parmi le polydiméthylsiloxane (ou PDMS), le diméthyl méthylvinyl polysiloxane, le polydiphénylsiloxane, le copolymère de diphénylsiloxane-diméthylsiloxane sur lequel un groupement terminal silanol a été greffé, ou leurs mélanges.

La teneur en silicone présentant une terminaison silanol est de préférence d'au moins 0,05% en poids, généralement comprise dans l'intervalle de 0,05 à 25%, de façon encore plus préférée de 0,05 à 10%, en poids par rapport au poids total de la composition.

Le silicone présentant une terminaison silanol peut se présenter sous toute forme connue de l'homme du métier, par exemple sous forme liquide telle une émulsion.

Un tel composé est par exemple une émulsion polydiméthylsiloxane terminé silanol dans l'eau (masse moléculaire 40 000 à 45 000 g/mol), de numéro CAS 70131-67-8, par exemple le composé DMS-S33M50 de la société GELEST.

La composition de l'invention est généralement préparée en mélangeant deux solutions, l'une obtenue à partir de l'acide polycarboxylique et du catalyseur, l'autre obtenue en mélangeant les deux composés silanes et le composé silicone. Au cours de la préparation, de l'alcool, quoique non présent au départ, est généré.

Les composés silanes de la composition de l'invention réagissent avantageusement selon un procédé sol-gel. Ce procédé consiste généralement à utiliser comme précurseurs des alcoxydes métalliques de formule M(OR)ₓR'ₙ₋ₓ où M est un métal, notamment le silicium, R est un groupement alkyle et R' est un groupement porteur d'au moins un groupement tel qu'un groupement alkyle (méthyl, éthyl,...) ou bien tel qu'un groupement fonctionnel, de préférence choisi dans le groupe formé par les époxys, les isocyanates et les mercaptos ; avec n=4 et x pouvant varier entre 1 et 4. En présence d'eau, les groupements alkoxy (OR) sont hydrolysés en groupements (M-OH). Ces derniers se condensent en formant des liaisons (M-O-M-). Cela conduit dans un premier temps à la formation d'un sol constitué de petits oligomères en solution, puis d'un réseau inorganique gonflé de solvant, appelé gel. Le solvant est ensuite éliminé du gel pour former un matériau (sol-gel), par exemple sous forme de revêtement. Le procédé sol-gel conduit donc à la formation d'un réseau tridimensionnel.

En pratique, l'acide polycarboxylique et le catalyseur de la formation d'un anhydre d'acide à partir de l'acide polycarboxylique sont généralement mélangés pour constituer le mélange A. D'autre part, les 2 composés silanes sont généralement mélangés pour constituer le mélange B.

Le mélange A est ajouté à l'eau sous agitation. Le mélange B est ensuite ajouté à ce mélange aqueux sous agitation. Enfin, le silicone présentant une terminaison silanol est enfin ajouté à la solution aqueuse ainsi constituée sous agitation.

La solution obtenue (apprêt) est agitée pendant une durée comprise dans l'intervalle de 0 à 24 heures, avant application sur un textile.

Ainsi, sous un deuxième aspect, l'invention concerne un procédé de revêtement d'un textile par au moins une composition selon l'invention, comprenant les étapes successives suivantes :
a) appliquer la composition selon l'invention sur le textile par un procédé d'ennoblissement, de préférence choisi parmi le foulardage-exprimage, la pulvérisation, et l'imprégnation ;
b) sécher le textile revêtu ;
c) procéder à un traitement thermique de finition du textile revêtu et séché.

Un tel procédé permet d'obtenir un film réticulé et fixé sur le textile. Comme expliqué précédemment, la composition et les conditions d'application permettent avantageusement d'obtenir une résistance du traitement à l'usage, notamment aux lavages et à l'abrasion, du textile ainsi revêtu.

Les procédés d'ennoblissement (ou de traitement des surfaces) utilisés pour appliquer la composition sur le textile sont bien connus de la personne du métier.

Le foulardage-exprimage est une technique bien connue de la personne du métier, qui correspond à un exprimage au foulard. Le foulardage consiste en l'imprégnation au moyen d'un foulard d'un support par une composition qui est ensuite exprimée au moins entre deux rouleaux. Le foulard est, ainsi qu'il est connu de la personne du métier, une machine effectuant l'imprégnation des tissus par le bain d'apprêt, et comportant essentiellement une bacholle et un nombre pair de rouleaux d'exprimage.

La pulvérisation est une technique bien connue de la personne du métier, qui consiste à pulvériser la solution d'apprêt de façon homogène sur le textile.,

L'imprégnation est une technique bien connue de la personne du métier, qui consiste à immerger le textile dans une solution, à l'enlèvement du textile imbibé de ladite composition, et au drainage de l'excès de solution.

Le séchage est réalisé de façon connue de la personne du métier (préciser) par exemple dans une machine de séchage du textile sous tension de type rame, des caissons de séchage, une étuve, un four, par une lampe infrarouge, etc.

Le traitement thermique de finition est réalisé de façon connue de la personne du métier, par exemple dans une machine de séchage du textile sous tension de type rame, une machine de polymérisation, des caissons de séchage, une étuve, un four, par une lampe infrarouge, etc.

Selon un troisième aspect, l'invention concerne un textile revêtu obtenu par le procédé selon l'invention, ledit textile étant de préférence choisi dans le groupe formé par les textiles comprenant des fibres cellulosiques naturelles ou artificielles, tels que le coton, le lin, le chanvre, le modal, le lyocell ou la viscose.

### EXEMPLES

### Préparation de deux compositions d'apprêt I et II selon l'invention.

Le détail de leurs composants respectifs est donné dans le Tableau 1 suivant :

**Tableau 1**

| Composition d'apprêt | I | II |
|---|---|---|
| | % massique | % massique |
| Acide 1,2,3,4-butanetétracarboxylique | 0,65 | 0,32 |
| Hypophosphite de sodium | 0,32 | 0,16 |
| Mélange de 3-glycidyloxypropyltriéthoxysilane (GPTEOS) | 7,45 | 3,73 |
| et de tétraéthoxysilane (TEOS) | 0,58 | 0,29 |
| Emulsion polydiméthylsiloxane terminé silanol dans l'eau (masse moléculaire 40 000 à 45 000 g/mol) (composé DMS-S33M50 de la société GELEST) | 2,34 | 1,18 |
| Eau | 88,65 | 94,32 |

Les protocoles de préparation de ces compositions d'apprêt I et II selon l'invention sont décrits ci-après. Ces protocoles permettent d'obtenir 50 litres de chacune des compositions d'apprêt.

### Protocole 1 de préparation de la composition I

- Mélanger à part le GPTEOS et le TEOS (3,88 kg) ;
- Introduire 25 L d'eau dans un mélangeur ;
- Ajouter sous agitation l'acide 1,2,3,4-butanetétracarboxylique (312,5 g) ;
- Ajouter sous agitation l'hypophosphite de sodium (156,5 g) ;
- Laisser agiter 5 minutes ;
- Ajouter sous agitation le mélange GPTEOS - TEOS (3,88 kg) dans le mélangeur ;
- Ajouter sous agitation le DMS-S33M50 (1,13 kg) dans le mélangeur ;
- Compléter avec de l'eau jusqu'à 50 L ;
- Laisser agiter 30 minutes.

### Protocole 2 de préparation de la composition II

- Mélanger à part le GPTEOS et le TEOS (1,94 kg) ;
- Introduire 25 L d'eau dure dans un mélangeur ;
- Ajouter sous agitation l'acide 1,2,3,4-butanetétracarboxylique (156,3 g) ;
- Ajouter sous agitation l'hypophosphite de sodium (78,3 g) ;
- Laisser agiter 5 minutes ;
- Ajouter sous agitation le mélange GPTEOS - TEOS (1,94 kg) dans le mélangeur ;
- Ajouter sous agitation le DMS-S33M50 (0,57 kg) dans le mélangeur ;
- Compléter avec de l'eau jusqu'à 50 L ;
- Laisser agiter 30 minutes.

### Procédé d'application des compositions d'apprêt I et II sur un textile

Les caractéristiques du textile utilisé étaient les suivantes : 65% coton 35% polyester ; 292 g/m² ; armure croisé 2/2.

L'application a été effectuée en continu sur 50 m linéaire sur une ligne industrielle composée d'une machine de foulardage-exprimage suivi d'une rame.

La laize avait pour largeur 150 cm.

La vitesse d'imprégnation était de quelque mètres/min, le foulardage et l'exprimage ont été effectuées à 1,5 bar (1 bar = 10⁵ Pa), suivi d'un séchage à 130°C pendant 1 min environ, puis d'un traitement thermique de finition à 170 °C pendant 3 min.

### Mesure des performances et des propriétés textiles avant et après lavage

Les lavages ménagers ont été effectués à 75°C selon la norme ISO 15797. Les résultats sont indiqués dans les Tableaux 2 et 3 ci-après.

**Tableau 2**

| **Caractérisation** | | **Revêtement par la composition I** | | | | | |
|---|---|---|---|---|---|---|---|
| | | Avant lavage | Après 1 lavage | Après 5 lavages | Après 10 lavages | Après 20 lavages | Après 50 lavages |
| **Angles rémanents selon la norme NF EN 22313** | Sens chaîne | 108 | 86 | 83 | 74 | | |
| | Sens trame | 126 | 115 | 102 | 101 | | |
| **Résistance au boulochage (5000 cycles) selon la norme ISO 12945** | | | 4 | 4 | 2/3 | 2 | 3 |
| **Résistance à l'abrasion (12 KPa) - selon la norme ISO 12947-2** | | 40000 | | | | | |
| **Défroissabilité selon la norme NF G 07 137-1** | | 3 | 3 | 3 | 2-3 | 2 | |
| **Retrait** | Sens chaîne | | -3 | -3 | -4 | -4 | -4 |
| | Sens trame | | -3 | -3 | -3 | -3,5 | -4 |

**Tableau 3**

| **Caractérisation** | | **Revêtement par la composition II** | | | | | |
|---|---|---|---|---|---|---|---|
| | | Avant lavage | Après 1 lavage | Après 5 lavages | Après 10 lavages | Après 20 lavages | Après 50 lavages |
| **Angles rémanents selon la norme NF EN 22313** | Sens chaîne | 102 | 95 | 80 | 77 | | |
| | Sens trame | 119 | 117 | 108 | 108 | | |
| **Résistance au boulochage (5000 cycles) selon la norme ISO 12945** | | | 3 | 3 | 2/3 | 2 | 3 |
| **Résistance à l'abrasion (12 KPa) - selon la norme ISO 12947-2** | | 45000 | | | | | |
| **Défroissabilité selon la norme NF G 07 137-1** | | 3 | 3 | 3 | 3 | 2 | |
| **Retrait** | Sens chaîne | | -3 | -3 | -3 | -3 | -4 |
| | Sens trame | | -3 | -3 | -3 | -3 | -4 |

Les performances des compositions d'apprêt pour textile selon l'invention sont similaires à celles d'une composition du commerce à base de résine urée-formol. L'invention propose donc une solution alternative de composition d'apprêt pour textile, en vue d'obtenir les propriétés recherchées, en particulier de défroissabilité, d'infroissabilité, de repassage facilité, de tenue au lavage et de facilité d'entretien.

## Revendications

1. Composition d'apprêt pour textile comprenant :
- au moins un solvant aqueux ;
- au moins un acide polycarboxylique ;
- au moins un catalyseur de la formation d'un anhydre d'acide à partir de l'acide polycarboxylique ;
- au moins un composé silane comprenant au moins un, de préférence trois ou quatre, de façon encore plus préférée quatre, groupement(s) hydrolysable(s) ;
- au moins un composé silane comportant au moins un groupement fonctionnel choisi dans le groupe formé par les époxys, les isocyanates et les mercaptos ; et
- au moins un silicone présentant une terminaison silanol.

2. Composition selon la revendication 1, telle qu'elle comprend de 45 à 97% en poids de solvant.

3. Composition selon l'une des revendications 1 ou 2, dans laquelle l'acide polycarboxylique est choisi dans le groupe formé par l'acide maléique, l'acide succinique, l'acide tartrique, l'acide citrique et l'acide 1,2,3,4-butanetétracarboxylique et leurs mélanges.

4. Composition selon l'une des revendications 1 à 3, dans laquelle la teneur en acide polycarboxylique est comprise dans l'intervalle de 0,1 à 20%, en poids par rapport au poids total de la composition.

5. Composition selon l'une des revendications 1 à 4, dans laquelle le catalyseur de la formation d'un anhydre d'acide à partir de l'acide polycarboxylique, est choisi parmi les composés phosphorés, de préférence l'hypophosphite de sodium.

6. Composition selon l'une des revendications 1 à 5, dans laquelle la teneur en catalyseur est comprise dans l'intervalle de 0,1 à 20%, en poids par rapport au poids total de la composition.

7. Composition selon l'une des revendications 1 ou 2, dans laquelle le composé silane au moins un groupement hydrolysable est choisi dans le groupe formé par le tétraméthoxysilane (TMOS), le tétraéthoxysilane (TEOS), le tétrabutoxysilane, le tétrapropoxysilane, l'éthyltriéthoxysilane, l'éthyltriméthoxysilane, le méthyltriéthoxysilane, le méthyltriméthoxysilane et leurs mélanges, le composé silane comprenant au moins un groupement hydrolysable étant de préférence le TEOS.

8. Composition selon l'une des revendications 1 à 3, dans laquelle la teneur en composé silane comprenant au moins un groupement hydrolysable est comprise dans l'intervalle de 0,1 % à 8 %, en poids par rapport au poids total de la composition.

9. Composition selon l'une des revendications 1 à 8, dans laquelle le composé silane comportant au moins un groupement fonctionnel est choisi dans le groupe formé par le 3-glycidyloxypropyltriméthoxysilane (GPTMOS), le 3-glycidyloxypropyltriéthoxy-silane ((GPTEOS), le 2-(3,4-époxycyclohexyl)éthyltriméthoxysilane, le 2-(3,4-époxycyclohexyl)éthyltriéthoxysilane, le 5,6-époxyhexyltriéthoxysilane, le (3-glycidoxypropyl)méthyldiéthoxysilane, le (3- glycidoxypropyl)méthyldiméthoxy-silane, le 8-glycidyloxyoctyltriméthoxysilane, le 1-(3-glycidoxypropyl)-1,1,3,3,3-pentaethoxy-1,3-sisilapropanone), et leurs mélanges.

10. Composition selon l'une des revendications 1 à 9, dans laquelle la teneur en composé silane comportant au moins un groupement fonctionnel choisi dans le groupe formé par les époxys, les isocyanates et les mercaptos, est comprise dans de 3 à 25% en poids, par rapport au poids total de la composition.

11. Composition selon l'une des revendications 1 à 9, dans laquelle le silicone présentant une terminaison silanol est choisi parmi le polydiméthylsiloxane (ou PDMS), le diméthyl méthylvinyl polysiloxane, le polydiphenylsiloxane, le copolymère de diphenylsiloxane-diméthylsiloxane sur lequel un groupement terminal silanol a été greffé, ou leurs mélanges.

12. Composition selon l'une des revendications 1 à 11, dans laquelle la teneur en silicone présentant une terminaison silanol est comprise dans l'intervalle de 0,05 à 25%, de façon encore plus préférée de 0,05 à 10%, en poids par rapport au poids total de la composition.

13. Procédé de revêtement d'un textile par au moins une composition selon l'une des revendications 1 à 12, comprenant les étapes successives suivantes :
a) appliquer la composition sur le textile par un procédé d'ennoblissement, de préférence choisi parmi le foulardage-exprimage, la pulvérisation, et l'imprégnation ;
b) sécher le textile revêtu ;
c) procéder à un traitement thermique de finition du textile revêtu et séché.

14. Textile revêtu obtenu par le procédé selon la revendication 13, ledit textile étant choisi dans le groupe formé par les textiles comprenant des fibres cellulosiques naturelles ou artificielles.

## Patentansprüche

1. Ausrüstungszusammensetzung für Textilien, umfassend:
- mindestens ein wässriges Lösungsmittel;
- mindestens eine Polycarbonsäure;
- mindestens einen Katalysator für die Bildung eines Säureanhydrids ausgehend von der Polycarbonsäure;
- mindestens eine Silanverbindung, die mindestens eine, vorzugsweise drei oder vier, noch stärker bevorzugt vier, hydrolysierbare Gruppe(n) umfasst;
- mindestens eine Silanverbindung, die mindestens eine funktionelle Gruppe aufweist, welche aus der Gesamtheit ausgewählt ist, die von Epoxy, Isocyanat und Mercapto gebildet wird; und
- mindestens ein Silikon, das ein endständiges Silanol aufweist.

2. Zusammensetzung nach Anspruch 1, derart, dass sie 45 bis 97 Gewichts-% an Lösungsmittel umfasst.

3. Zusammensetzung nach einem der Ansprüche 1 oder 2, wobei die Polycarbonsäure aus der Gesamtheit ausgewählt ist, die von Maleinsäure, Bernsteinsäure, Weinsäure, Citronensäure und 1,2,3,4-Butantetracarbonsäure sowie deren Mischungen gebildet wird.

4. Zusammensetzung nach einem der Ansprüche 1 bis 3, wobei der Gehalt an Polycarbonsäure im Bereich von 0,1 bis 20 % liegt, nach Gewicht unter Bezugnahme auf das Gesamtgewicht der Zusammensetzung.

5. Zusammensetzung nach einem der Ansprüche 1 bis 4, wobei der Katalysator für die Bildung eines Säureanhydrids ausgehend von der Polycarbonsäure aus den phosphorhaltigen Verbindungen ausgewählt ist, wobei es sich vorzugsweise um Natriumhypophosphit handelt.

6. Zusammensetzung nach einem der Ansprüche 1 bis 5, wobei der Gehalt an dem Katalysator im Bereich von 0,1 bis 20 % liegt, nach Gewicht unter Bezugnahme auf das Gesamtgewicht der Zusammensetzung.

7. Zusammensetzung nach einem der Ansprüche 1 oder 2, wobei die Silanverbindung mit mindestens einer hydrolysierbaren Gruppe aus der Gesamtheit ausgewählt ist, die von Tetramethoxysilan (TMOS), Tetraethoxysilan (TEOS), Tetrabutoxysilan, Tetrapropoxysilan, Ethyltriethoxysilan, Ethyltrimethoxysilan, Methyltriethoxysilan, Methyltrimethoxysilan und deren Mischungen gebildet wird, wobei es sich bei der Silanverbindung, welche mindestens eine hydrolysierbare Gruppe umfasst, vorzugsweise um TEOS handelt.

8. Zusammensetzung nach einem der Ansprüche 1 bis 3, wobei der Gehalt an der Silanverbindung, welche mindestens eine hydrolysierbare Gruppe umfasst, im Bereich von 0,1 bis 8 % liegt, nach Gewicht unter Bezugnahme auf das Gesamtgewicht der Zusammensetzung.

9. Zusammensetzung nach einem der Ansprüche 1 bis 8, wobei die Silanverbindung, welche mindestens eine funktionelle Gruppe umfasst, aus der Gesamtheit ausgewählt ist, die von 3-Glycidyloxypropyltrimethoxysilan (GPTMOS), 3-Glycidyloxypropyltriethoxysilan ((GPTEOS), 2-(3,4-Epoxycyclohexyl)ethyltrimethoxysilan, 2-(3,4-Epoxycyclohexyl)ethyltriethoxysilan, 5,6-Epoxyhexyltriethoxysilan, (3-Glycidoxypropyl)methyldiethoxysilan, (3-Glycidoxypropyl)methyldimethoxysilan, 8-Glycidyloxyoctyltrimethoxysilan, 1-(3-Glycidoxypropyl)-1,1,3,3,3-pentaethoxy-1,3-sisilapropanon) und deren Mischungen gebildet wird.

10. Zusammensetzung nach einem der Ansprüche 1 bis 9, wobei der Gehalt an Silanverbindung, die mindestens eine funktionelle Gruppe aufweist, welche aus der Gesamtheit ausgewählt ist, die von Epoxy, Isocyanat und Mercapto gebildet wird, im Bereich von 3 bis 25 Gewichts-% liegt, unter Bezugnahme auf das Gesamtgewicht der Zusammensetzung.

11. Zusammensetzung nach einem der Ansprüche 1 bis 9, wobei das Silikon, welches eine endständige Silanolgruppe aufweist, aus Polydimethylsiloxan (oder PDMS), Dimethylmethylvinylpolysiloxan, Polydiphenylsiloxan, Diphenylsiloxan-Dimethylsiloxan-Copolymer, auf welches eine endständige Silanolgruppe gepropft wurde, oder deren Mischungen ausgewählt ist.

12. Zusammensetzung nach einem der Ansprüche 1 bis 11, wobei der Gehalt an Silikon, welches ein endständiges Silanol aufweist, im Bereich von 0,05 bis 25 % liegt, noch stärker bevorzugt von 0,05 bis 10 % liegt, nach Gewicht unter Bezugnahme auf das Gesamtgewicht der Zusammensetzung.

13. Verfahren zum Beschichten einer Textilie mindestens mit einer Zusammensetzung nach einem der Ansprüche 1 bis 12, wobei es nacheinander die folgenden Schritte umfasst:
a) Aufbringen der Zusammensetzung auf die Textilie mittels eines Veredlungsverfahrens, das vorzugsweise aus dem Foulardieren-Abquetschen, dem Aufsprühen und dem Tränken ausgewählt ist;
b) Trocknen der beschichteten Textilie;
c) Einwirkenlassen einer abschließenden Wärmebehandlung auf die beschichtete und getrocknete Textilie.

14. Beschichtete Textilie, die mittels des Verfahrens nach Anspruch 13 erhalten wurde, wobei die Textilie aus der Gesamtheit ausgewählt ist, die von Textilien gebildet wird, welche natürliche oder künstliche celluloseartige Fasern umfasst.

## Claims

1. A primer composition for textile material comprising:
- at least one aqueous solvent;
- at least one polycarboxylic acid;
- at least one catalyst for the formation of an acid anhydride from the acid polycarboxylic;
- at least one silane compound having at least one, preferably three or four, more preferably four hydrolysable groups;
- at least one silane compound having at least one functional group chosen from the group formed by epoxies, isocyanates and mercaptos; and
- at least one silanol-terminated silicone.

2. The composition according to claim 1, comprising from 45 to 97% by weight of solvent.

3. The composition according to any one of claims 1 or 2, wherein the polycarboxylic acid is selected from the group consisting of maleic acid, succinic acid, tartaric acid, citric acid, and 1,2,3,4-butanetetracarboxylic acid, and mixtures thereof.

4. The composition according to any one of claims 1 to 3, wherein the polycarboxylic acid content is in the range of 0.1 to 20%, by weight relative to the total weight of the composition.

5. The composition according to any one of claims 1 to 4, wherein the catalyst for the formation of an acid anhydride from the polycarboxylic acid is chosen from phosphorus compounds, preferably sodium hypophosphite.

6. The composition according to any one of claims 1 to 5, wherein the catalyst content is in the range of 0.1 to 20%, by weight relative to the total weight of the composition.

7. The composition according to any one of claims 1 or 2, wherein the silane compound having at least one hydrolysable group is selected from the group consisting of tetramethoxysilane (TMOS), tetraethoxysilane (TEOS), tetrabutoxysilane, tetrapropoxysilane, ethyltriethoxysilane, ethyltrimethoxysilane, methyltriethoxysilane, methyltrimethoxysilane, and mixtures thereof, the silane compound having at least one hydrolysable group preferably being TEOS.

8. The composition according to any one of claims 1 to 3, wherein the content of silane compound having at least one hydrolysable group is in the range from 0.1% to 8%, by weight relative to the total weight of the composition.

9. The composition according to any one of claims 1 to 8, wherein the silane compound having at least one functional group is selected from the group consisting of 3-glycidyloxypropyltrimethoxysilane (GPTMOS), 3-glycidyloxypropyltriethoxy-silane (GPTEOS), 2-(3,4-epoxycyclohexyl)ethyltrimethoxysilane, 2-(3,4-epoxycyclohexyl)ethyltriethoxysilane, 5,6-epoxyhexyltriethoxysilane, (3-glycidoxypropyl)methyldiethoxysilane, (3-glycidoxypropyl)methylldimethoxy-silane, 8-glycidyloxyoctyltrimethoxysilane, 1-(3-glycidoxypropyl) -1,1,3,3,3-pentaethoxy-1,3-sisilapropanone), and mixtures thereof.

10. The composition according to any one of claims 1 to 9, wherein the content of silane compound having at least one functional group chosen from the group consisting of formed by epoxies, isocyanates and mercaptos is between 3 and 25% by weight, relative to the total weight of the composition.

11. The composition according to any one of claims 1 to 9, wherein the silanol-terminated silicone is selected from polydimethylsiloxane (or PDMS), dimethyl methylvinyl polysiloxane, polydiphenylsiloxane, diphenylsiloxane-dimethylsiloxane copolymer to which a silanol end group has been grafted, or mixtures thereof.

12. The composition according to any one of claims 1 to 11, wherein the content of the silanol-terminated silicone is in the range from 0.05 to 25%, more preferably from 0.05 to 10%, by weight relative to the total weight of the composition.

13. A method for coating a textile material with at least one composition according to any one of claims 1 to 12, comprising the following successive steps:
a) applying the composition to the textile material by an ennobling process, preferably chosen from padding-squeezing, spraying, and impregnation;
b) drying the coated textile material;
c) carry out a finishing heat treatment of the coated and dried textile.

14. A coated textile material obtained by the method according to claim 13, said textile material being selected from the group formed by textile materials comprising natural or artificial cellulosic fibres.
